# EUROPEAN PATENT APPLICATION

(11) **EP 2 037 084 A1**
(43) Date of publication of application: **18.03.2009**
(21) Application number: 08155529.4
(22) Date of filing: 30.04.2008
(51) Int. Cl.: F01D 17/16, F02B 37/24, F01D 17/14

(54) **Turbocharger with sliding piston, having overlapping fixed and moving vanes**

(30) Priority: 01.05.2007 US 742766
(71) Applicant: Honeywell International Inc., Morristown NJ 07960 (US)
(72) Inventor: Roberts, Quentin, FR 54000, Nancy (FR); Serres, Nicholas NS, FR 88000, Epinal (FR); Ferrari, Sebastien SF, 88 88155, Thaon les vosges (FR)
(74) Representative: Buckley, Guy Julian

(57) **Abstract**

A turbocharger having a sliding piston for regulating exhaust gas flow into the turbine wheel includes a set of fixed vanes mounted on a fixed first wall of the turbine nozzle and projecting axially toward an opposite second wall ofthc nozzle, and a set of moving vanes mounted on the end of the piston and projecting in an opposite axial direction toward the first wall of the nozzle. The two sets of vanes are circumferentially staggered relative to each other and overlap each other, the degree of overlap depending on the piston's axial position. The turbine wheel can be a splittered turbine wheel having long blades alternating with shorter blades.

## Description

### BACKGROUND OF THE INVENTION

The present disclosure relates to turbochargers having a sliding piston in the turbine nozzle for regulating exhaust gas flow into the turbine.

An exhaust gas-driven turbocharger is a device used in conjunction with an internal combustion engine for increasing the power output of the engine by compressing the air that is delivered to the engine's air intake to be mixed with fuel and burned in the engine. A turbocharger comprises a compressor wheel mounted on one end of a shaft in a compressor housing and a turbine wheel mounted on the other end of the shaft in a turbine housing. Typically the turbine housing is formed separately from the compressor housing, and there is a center housing connected between the turbine and compressor housings for containing bearings for the shaft. The turbine housing defines a generally annular chamber that surrounds the turbine wheel and that receives exhaust gas from the engine. The turbine assembly includes a nozzle that leads from the chamber into the turbine wheel. The exhaust gas flows from the chamber through the nozzle to the turbine wheel and the turbine wheel is driven by the exhaust gas. The turbine thus extracts power from the exhaust gas and drives the compressor. The compressor receives ambient air through an inlet of the compressor housing and the air is compressed by the compressor wheel and is then discharged from the housing to the engine air intake.

One of the challenges in boosting engine performance with a turbocharger is achieving a desired amount of engine power output throughout the entire operating range of the engine. It has been found that this objective is often not readily attainable with a fixed-geometry turbocharger, and hence variable-geometry turbochargers have been developed with the objective of providing a greater degree of control over the amount of boost provided by the turbocharger. One type of variable-geometry turbocharger employs a sliding piston in the turbine nozzle. The piston is slidably mounted in the turbine housing and is connected to a mechanism that translates the piston axially back and forth. Changing the position of the piston has the effect of changing the effective flow area through the turbine nozzle, and thus the flow of exhaust gas to the turbine wheel can be regulated by controlling the piston position. In this manner, the power output of the turbine can be regulated, which allows engine power output to be controlled to a greater extent than is generally possible with a fixed-geometry turbocharger.

Typically the sliding piston mechanism also includes vanes that are either attached to an end of the piston or to a fixed wall of the turbine nozzle. When the piston is fully closed, there is still an opening between the end of the piston and the fixed wall of the nozzle, and the vanes typically extend fully across this opening. However, when the piston begins to open, in some such piston mechanisms a vane-free gap begins to develop either between the end of the piston and the ends of the vanes (when the vanes are mounted on the fixed nozzle wall) or between the ends of the vanes and the nozzle wall (when the vanes are mounted on the piston). This is undesirable because at the moment the gap begins to develop, the flow of exhaust gas around the vane ends and through the vane-free gap has poor aerodynamics, which adversely impacts turbine efficiency. The flow rate into the turbine also tends to change quite abruptly with small changes in piston position during this initial opening movement of the piston, which makes it difficult to control the turbine with accuracy during this transition.

In order to try to overcome such disadvantages, it has been proposed to include slots either in the piston end or in the nozzle wall for the vanes to extend into. In this manner, the vanes can be made long enough so that even when the piston is fully open, the vanes extend fully across the nozzle opening. However, this has its own drawbacks. Because the exhaust gas flowing through the nozzle is very hot, the piston, vanes, and nozzle wall are all subj ect to dimensional changes caused by thermal growth and contraction as the gas temperature changes. Accordingly, in order to prevent the vanes from binding in the slots at all operating conditions, it is necessary to provide large tolerances. Therefore, there are substantial gaps between the vanes and the edges of the slots that receive the vanes, and the exhaust gas can leak through these gaps. This not only partially defeats the purpose of the vanes, but when the slots are in the fixed nozzle wall they can allow hot exhaust gas to migrate into the center housing where the gas can heat up the bearings, which is highly undesirable.

### BRIEF SUMMARY OF THE DISCLOSURE

The present disclosure concerns a turbocharger having a sliding piston, which substantially avoids the drawbacks of prior turbochargers noted above. The turbocharger includes a set of fixed vanes mounted on a fixed first wall of the turbine nozzle and projecting axially toward an opposite second wall of the nozzle, and a set of moving vanes mounted on the end of the piston and projecting in an opposite axial direction toward the first wall of the nozzle. The two sets of vanes are circumferentially staggered relative to each other and overlap each other in closed and partially open positions of the piston. When the piston is fully open, however, the two sets of vanes no longer overlap, such that there is a vane-free space between the respective ends of the two sets of vanes. This arrangement can substantially improve on the smoothness of the flow rate change through the nozzle as the piston is moved from its closed position toward its open position or vice versa. Furthermore, the necessity of providing slots in the nozzle wall or piston is avoided, thereby substantially eliminating the possibility of exhaust gas leaking through such slots and possibly heating up the bearings.

In one embodiment, when the piston is in the closed position, both sets of vanes extend substantially fully across the open axial extent of the nozzle (i.e., the two sets completely overlap each other) to provide a low-area, high-guidance flow path for the exhaust gas. During the piston stroke, the flow area changes substantially linearly with piston position, thereby assuring that no sudden change in turbine flow characteristic will occur.

Alternatively, it is also possible that when the piston is closed, the two sets of vanes do not completely overlap each other.

In accordance with one embodiment, there are equal numbers of fixed and moving vanes, and each moving vane is approximately midway, along a circumferential direction, between two fixed vanes. In one embodiment, all of the fixed and moving vanes are substantially identical to one another in outer contour and axial length.

In one embodiment, the fixed vanes are mounted on a heat shield that is formed separately from the center housing and turbine housing. The heat shield is captured between the center and turbine housings. Alternatively, the fixed vanes can be mounted on a different component, such as a piece separate from the heat shield, the piece being captured between the heat shield and the turbine housing. Various other mounting schemes can also be used.

In accordance with one embodiment, the turbocharger also includes an anti-rotation device that prevents the piston from rotating about its axis by any significant amount, while allowing the piston to translate axially.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:

FIG. 1 is a cross-sectional view of a turbocharger in accordance with one embodiment of the invention, with the piston in a closed position;

FIG. 2 is a view similar to FIG. 1, showing the piston in a partially open position;

FIG. 2A is a view similar to FIG. 2, showing the piston fully open;

FIG. 3 is a cross-sectional view along line 3-3 in FIG. 1;

FIG. 4 is a cross-sectional view along line 4-4 in FIG. 2; and

FIG. 5 is a cross-sectional view along line 5-5 in FIG. 2.

### DETAILED DESCRIPTION OF THE DRAWINGS

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

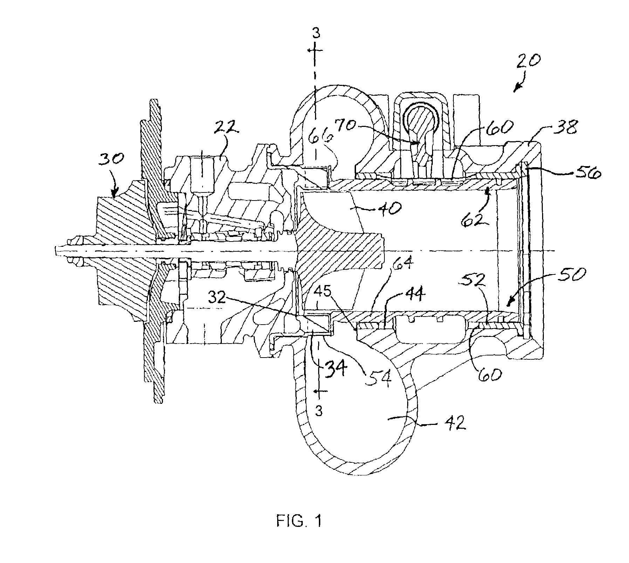

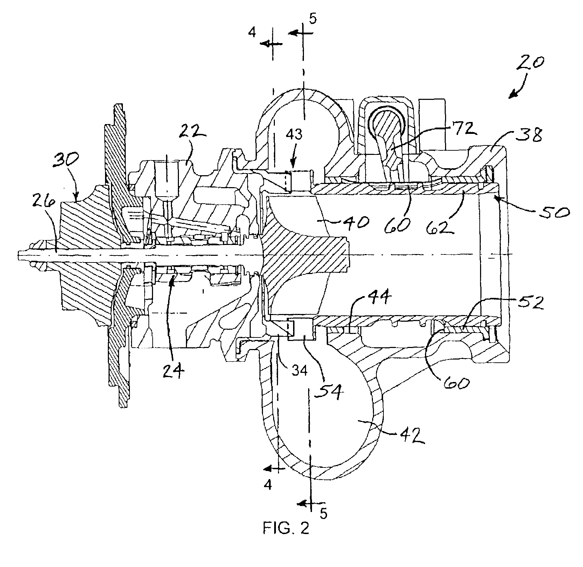

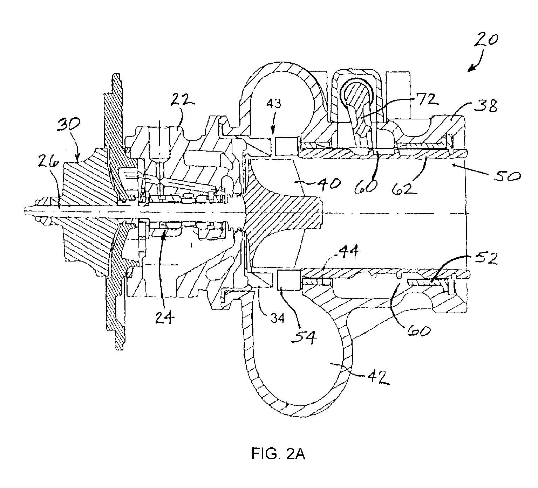

A turbocharger **20** in accordance with one embodiment of the invention is shown in FIGS. 1 through 5. The turbocharger includes a center housing **22** that contains bearings **24** for a rotary shaft **26** of the turbocharger. A compressor housing (not shown) is coupled to one side of the center housing. A compressor wheel 30 is mounted on one end of the shaft **26** and is disposed in the compressor housing. Although not illustrated, it will be understood that the compressor housing defines an inlet through which air is drawn into the compressor wheel **30**, which compresses the air, and further defines a diffuser through which the compressed air is discharged from the compressor wheel into a volute surrounding the compressor wheel. From the volute, the air is delivered to the intake of an internal combustion engine (not shown). The turbocharger further comprises a turbine housing **38** coupled to the opposite side of the center housing **22**. A turbine wheel **40** is mounted on the opposite end of the shaft **26** from the compressor wheel and is disposed in the turbine housing. The turbine housing defines a chamber 42 that surrounds the turbine wheel **40** and receives exhaust gas from the internal combustion engine. Exhaust gas is directed from the chamber **42** through a nozzle **43** (FIG. 2) into the turbine wheel **40**, which expands the exhaust gas and is driven thereby so as to drive the compressor wheel.

A heat shield **32** is disposed between the center housing **22** and turbine housing **38**. The heat shield comprises a first wall of the turbine nozzle **43**; an opposite second wall **45** of the nozzle is formed by the turbine housing **38**. The heat shield **32** supports a set of circumferentially spaced fixed vanes **34** that extend axially from the heat shield partway across the axial extent of the nozzle **43** toward the second wall **45**.

The turbine housing **38** defines a generally cylindrical bore **44** whose diameter generally corresponds to a radially innermost extent of the chamber **42**. The turbine wheel **40** resides in an upstream end of the bore **44** and the turbine wheel's rotational axis is substantially coaxial with the bore. The term "upstream" in this context refers to the direction of exhaust gas flow through the bore **44**, as the exhaust gas in the chamber **42** flows into the turbine wheel **40** and is then turned to flow generally axially (left to right in FIG. 1) through the bore **44** to its downstream end.

In one embodiment, the turbine wheel can be a "splittered" turbine wheel (not shown) in which there are full-length blades alternating with partial-length blades. An example of such a splittered turbine wheel is described in published PCT application WO 2004/074642 Al to Lombard et al. entitled "Turbine Having Variable Throat", published on September 2, 2004, the entire disclosure of which is hereby incorporated herein by reference. The full-length blades have a greater length in the axial direction than do the partial-length blades. More particularly, the full-length blades are positioned such that they span substantially the full axial extent of the nozzle **43** when the piston is in the fully open position as in FIG. 2A. The partial-length blades are positioned such that they span the axial extent of the nozzle at least when the piston is closed as in FIG. 1. Accordingly, all of the exhaust gas flowing through the nozzle encounters both the full-length and the partial-length turbine blades when the piston is closed. When the piston is fully open, some of the exhaust gas encounters both sets of blades, but the remainder of the exhaust gas encounters only the full-length blades (i.e., the portions of the full-length blades extending downstream of the trailing edges of the partial-length blades).

The turbocharger includes a sliding piston assembly **50** that resides in the bore **44** of the turbine housing. The piston assembly comprises a tubular carrier **52** whose outer diameter is slightly smaller than the diameter of the turbine housing bore **44** such that the carrier **52** can be slid axially into the bore **44** from its downstream end (i.e., slid right to left in FIG. 1). The bore **44** includes a radially inward step that faces downstream and the carrier includes a radially outwardly projecting flange or protuberance that abuts the step. A retainer clip or ring **56** is snapped into a groove in the inner surface of the bore **44** behind the carrier **52** to retain the carrier in the turbine housing. Thus, the carrier is prevented from moving axially in the bore **44** by the step and the retainer ring **56**. It is also advantageous to include an anti-rotation feature (not shown) to prevent the carrier from rotating about its axis. The anti-rotation feature can comprise a keyed or spline arrangement between the carrier and the turbine housing, for example.

The piston assembly **50** further comprises a piston **62** of tubular form. The piston is coaxially disposed within the central bore of the carrier **52** and is slidable relative to the carrier in the axial direction. The piston is axially slidable between a closed position as shown in FIG. 1 wherein the end of the piston abuts the free ends of the fixed vanes **34** or is closely adjacent thereto, a fully open position as shown in FIG. 2A wherein the end of the piston is spaced from the free ends of the vanes by a relatively larger distance, and various partially open positions such as shown in FIG. 2 wherein the piston is spaced by smaller distances from the vanes. The piston includes an anti-rotation device (e.g., keys or splines, not shown) that substantially prevents the piston from rotating about its axis while allowing it to translate axially. The piston comprises a tubular portion **64** whose outer diameter is slightly smaller than the inside diameter of the carrier **52** such that the tubular portion can be slid axially into the carrier from its upstream end (i.e., slid left to right in FIG. 1). The piston also includes a radially outwardly extending flange portion **66** that projects outwardly from the upstream end of the tubular portion **64**.

The carrier **52** can have an axial split (not shown) extending the length of the carrier. The split enables the carrier to expand and contract in diameter in response to thermal effects or other causes. The carrier advantageously has an inner diameter only slightly greater than the outer diameter of the piston **62**, such that a very small gap exists between the carrier and piston. Accordingly, leakage flow through the gap is minimized. Because the carrier can expand and contract in diameter, there is no need to make the gap large to facilitate assembly or to accommodate dimensional changes during operation. The ability of the carrier to expand also means that binding of the piston is avoided.

The carrier **52** includes a plurality of axially elongated apertures **60** through the side wall of the carrier. The turbocharger also includes a piston actuating linkage comprising a forkshaped swing arm **70**. The swing arm has a pair of arms **72** whose distal ends extend through two of the apertures **60** and engage the piston **62** at diametrically opposite locations of the piston. The swing arm is disposed adjacent the outer surface of the carrier and resides in a portion of the bore **44** that has an enlarged diameter. The swing arm is pivotable about a transverse axis so as to cause the piston to be advanced axially within the carrier **52**. FIG. 1 shows the piston in the closed position, wherein the distal ends of the arms **72** are positioned toward one end of the apertures **60**. FIG. 2A shows the piston in the fully open position in which the arms are positioned toward the other end of the apertures. The apertures are axially elongated to allow the requisite degree of axial travel of the arms **72**. The swing arm **70** is actuated by an actuator mechanism coupled to an actuator such as a vacuum chamber actuator or the like (not shown).

As an alternative to having the piston actuating mechanism on the side of the piston as shown, it is possible to position the actuator behind the piston (to the right in FIG. 1). Such axially positioned actuator arrangements are known, one example of which is described in U.S. Patent No. 6,694,733, the disclosure of which is incorporated herein by reference.

A set of moving vanes **54** is affixed to the end of the piston, and specifically to the flange portion 66. The moving vanes **54** extend in an opposite axial direction to that of the fixed vanes **34**, toward the heat shield **32**. As shown in FIG. 1, when the piston **62** is in a closed position (defined as the position in which there is the smallest axial spacing distance between the flange portion **66** of the piston and the wall of the nozzle formed by the heat shield **32**), the free ends of the fixed vanes **34** abut or are closely adjacent the flange portion **66** of the piston, and similarly the free ends of the moving vanes **54** abut or are closely adjacent the fixed wall formed by the heat shield **32** (or by another fixed component on which the fixed vanes may be mounted). Accordingly, when the piston is in the closed position as in FIG. 1, both the fixed and moving vanes extend substantially fully across the open axial extent of the nozzle defined between the heat shield and the piston flange portion. It is also possible either to provide shallow recesses (not through-going holes or slots) in the fixed wall on which the fixed vanes are mounted such that the recesses receive the ends of the moving vanes when the piston is closed, or to provide the recesses in the end face of the piston to receive the ends of the fixed vanes when the piston is closed (or the recesses could be provided in both the fixed wall and the piston). This would reduce the possibility of there being a slight gap if one or more vanes were slightly shorter than the others as a result of manufacturing tolerances.

The fixed vanes **34** are circumferentially spaced apart about a 360° annulus and likewise the moving vanes **54** are circumferentially spaced about the 360° annulus. The moving vanes **54** are circumferentially staggered relative to the fixed vanes **34**, and the fixed vanes **34** overlap with the moving vanes **54**. The extent of the overlap depends on the position of the piston **62**, as further described below.

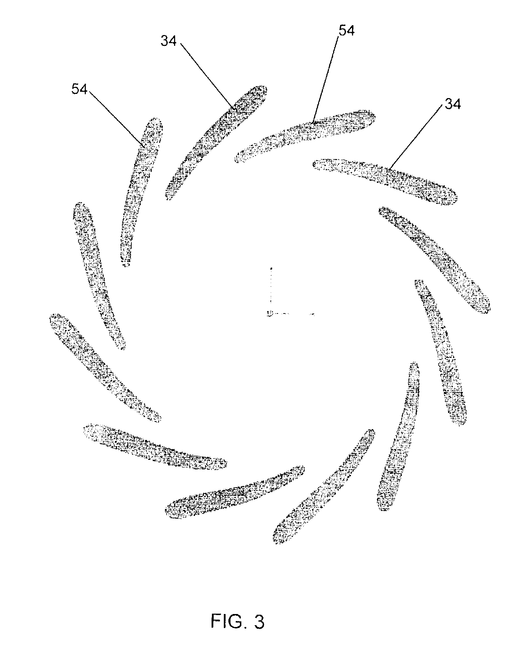

In one embodiment as illustrated, there are equal numbers of fixed and moving vanes, and each moving vane **54** is approximately midway, along a circumferential direction, between two fixed vanes **34**. This is best seen in FIG. 3.

In one embodiment as illustrated, the fixed and moving vanes are substantially identical to one another in outer contour and vane axial length.

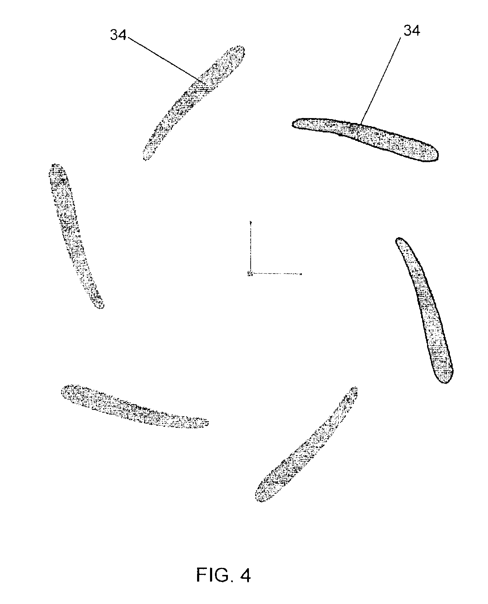

In one embodiment, the maximum axial travel of the piston **62** exceeds the axial length of the vanes, and therefore there is a vaneless gap between the fixed vanes **34** and the moving vanes **54** when the piston is fully open. At this position, the open axial extent of the nozzle has a first portion in which the exhaust gas flows between the parts of the fixed vanes **34**, a second (middle) portion in which the exhaust gas flows through the vaneless gap between the fixed and moving vanes, and a third portion in which the exhaust gas flows between the parts of the moving vanes **54**. FIG. 4 shows the cross-sectional view through the first portion, which is characterized by low vane blockage and thus high flow area, and also by low flow guidance because of the relatively wide spacing between the fixed vanes **34**.

The second middle portion of the nozzle is free of vanes when the piston is fully open, and thus has a relatively high flow area. The ability of the piston to open far enough to develop this vaneless gap is a key feature of the present invention. The vaneless gap allows a higher maximum mass flow rate through the turbine nozzle, as required for some extreme operating conditions.

At partially open positions of the nozzle as in FIG. 2, the second middle portion of the nozzle has both the fixed and moving vanes overlapping each other.

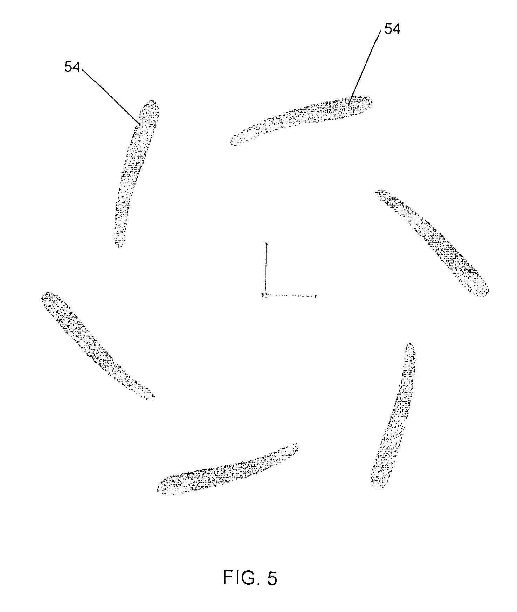

FIG. 5 shows the cross-sectional view through the third portion of the nozzle, which is characterized by low vane blockage and thus high flow area, and also by low flow guidance because of the relatively wide spacing between the moving vanes **54**.

When the piston is in the closed position as in FIG. 1, substantially the entire open axial extent of the nozzle has both the fixed and moving vanes extending substantially all the way across the nozzle, and thus has lower flow area and higher flow guidance, as best seen in FIG. 3. As the piston begins to move toward the open position, the first and third portions of the nozzle begin to be created, and the total flow area through the nozzle increases generally linearly with piston position as the first and third portions grow and the region of vane overlap shrinks in axial extent. When the piston is fully open as in FIG. 2A, the two sets of vanes no longer overlap, and a gap develops between the ends of the two sets of vanes.

From this description of the illustrated embodiment, it will be recognized that there is never any vane-free gap in the closed and partially open positions of the piston. The flow area through the nozzle increases substantially linearly with piston position as the piston is opened. Additionally, the piston is able to move far enough to form a vaneless gap between the two sets of vanes. These features allow better control over the flow rate through the nozzle than in some prior turbocharger arrangements, particularly as the piston just begins to open from its closed position, and enable a high maximum mass flow rate when the piston is fully open as a result of the development of the vaneless gap between the two sets of vanes.

The fixed and moving vanes in accordance with the invention can be adapted to turbochargers of various configurations having sliding pistons. In some turbochargers, the piston may directly engage the bore of the turbine housing; in this case, an anti-rotation device (e.g., keys or splines) between the piston and turbine housing prevents the piston from rotating about its axis. In other turbochargers there may be an intervening carrier or sleeve in the turbine housing bore as in the illustrated embodiment, and the piston may directly engage the carrier or sleeve; in this case, anti-rotation devices are employed to prevent both the carrier and the piston from rotating. Additionally, in some turbochargers the fixed vanes may be mounted on a separate member such as a heat shield as in the illustrated embodiment. In other turbochargers the fixed vanes may be mounted directly on a portion of the center housing or on another component that is separate from the center housing and heat shield and is captured between the heat shield and turbine housing.

Thus, many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A turbocharger comprising:
a center housing containing a bearing assembly and a rotary shaft mounted in the bearing assembly;
a compressor wheel affixed to one end of the shaft;
a turbine wheel affixed to an opposite end of the shaft and disposed in a bore of a turbine housing coupled to an opposite side of the center housing, the turbine housing defining a chamber surrounding the turbine wheel for receiving exhaust gas to be directed into the turbine wheel, a turbine nozzle being defined between fixed axially spaced first and second walls such that exhaust gas flows from the chamber through the turbine nozzle into the turbine wheel;
a sliding piston disposed in the bore of the turbine housing such that the piston is axially slidable between a closed position and an open position, the piston having an end that is spaced from the first wall by a relatively small distance in the closed position of the piston and by a relatively large distance in the open position of the piston, an open axial extent of the nozzle being defined between the first wall and the end of the piston;
a set of circumferentially spaced fixed vanes mounted on the first wall and projecting in one axial direction toward the second wall; and
a set of circumferentially spaced moving vanes mounted on the end of the piston and projecting in an opposite axial direction toward the first wall;
the fixed vanes being circumferentially staggered relative to the moving vanes and overlapping the moving vanes when the piston is closed and partially open, wherein the fixed and moving vanes no longer overlap when the piston is in the open position such that a vaneless gap exists between the fixed and moving vanes.

2. The turbocharger of claim 1, configured such that in the closed position of the piston both sets of vanes extend substantially fully across the open axial extent of the nozzle to provide a low-area, high-guidance flow path for the exhaust gas.

3. The turbocharger of claim 1, wherein the piston is substantially prevented from rotating about its axis relative to the turbine housing.

4. The turbocharger of claim 1, wherein the first wall comprises a heat shield formed separately from the center housing and turbine housing, the heat shield being mounted between the center and turbine housings.

5. The turbocharger of claim 1, wherein the fixed vanes are uniformly spaced about a 360° annulus.

6. The turbocharger of claim 5, wherein the moving vanes are uniformly spaced about a 360° annulus.

7. The turbocharger of claim 6, wherein there are equal numbers of fixed and moving vanes, and each moving vane is approximately midway, along a circumferential direction, between two fixed vanes.

8. The turbocharger of claim 1, wherein the fixed vanes and the moving vanes are all substantially identical to one another in outer contour and axial length.

9. The turbocharger of claim 1, wherein the turbine wheel comprises a splittered turbine wheel having first blades of relatively greater axial length alternating with second blades of relatively smaller axial length.

10. An assembly for use in a turbocharger, comprising:
a turbine housing defining an axial bore, the turbine housing defining a chamber surrounding the bore for receiving exhaust gas to be directed into the bore, a turbine nozzle being defined between fixed axially spaced first and second walls such that exhaust gas flows from the chamber through the turbine nozzle into the bore;
a sliding piston disposed in the bore of the turbine housing such that the piston is axially slidable between a closed position and an open position, the piston having an end that is spaced from the first wall by a relatively small distance in the closed position of the piston and by a relatively large distance in the open position of the piston, an open axial extent of the nozzle being defined between the first wall and the end of the piston;
a set of circumferentially spaced fixed vanes mounted on the first wall and projecting in one axial direction toward the second wall; and
a set of circumferentially spaced moving vanes mounted on the end of the piston and projecting in an opposite axial direction toward the first wall;
the fixed vanes being circumferentially staggered relative to the moving vanes and overlapping the moving vanes when the piston is closed and partially open, wherein the fixed and moving vanes no longer overlap when the piston is in the open position such that a vaneless gap exists between the fixed and moving vanes.

11. The assembly of claim 10, wherein the first wall comprises a heat shield formed separately from the turbine housing.

12. The assembly of claim 10, wherein there are equal numbers of fixed and moving vanes, and each moving vane is approximately midway, along a circumferential direction, between two fixed vanes.

13. The assembly of claim 10, wherein the fixed vanes and the moving vanes are all substantially identical to one another in outer contour and axial length.

14. The assembly of claim 10, wherein the piston includes a tubular portion engaged in the bore of the turbine housing, and a flange portion that extends radially outwardly from an upstream end of the tubular portion, and wherein the moving vanes are mounted on the flange portion.
